# EUROPEAN PATENT APPLICATION

(11) **EP 4 700 867 A2**
(43) Date of publication of application: **25.02.2026**
(21) Application number: 26150720.6
(22) Date of filing: 08.01.2026
(51) Int. Cl.: H01M 4/60, H01M 4/36

(54) **ELECTROCHEMICAL DEVICE AND ELECTRONIC DEVICE**

(30) Priority: 09.01.2025 CN 202510034192
(71) Applicant: Ningde Amperex Technology Limited, Ningde, Fujian 352100 (CN)
(72) Inventor: WANG, Taosheng, Ningde City, Fujian Province, 352100 (CN); SONG, Chuantao, Ningde City, Fujian Province, 352100 (CN)
(74) Representative: Kraus & Lederer PartGmbB

(57) **Abstract**

An electrochemical device includes a positive electrode plate. The positive electrode plate includes a positive electrode current collector, a first coating layer, and a positive electrode material layer; the first coating layer is disposed on a surface of the positive electrode current collector; the positive electrode material layer is disposed on a surface of the first coating layer facing away from the positive electrode current collector; the first coating layer includes a first main material and a first binder; the first main material includes a solid-state electrolyte; a carbon material is provided on a surface of the solid-state electrolyte; the first main material has a Dv50 of 50 nm to 200 nm; and the first coating layer has a thickness of 0.5 µm to 2 µm. The electrochemical device of the present application has good nail penetration safety performance while achieving good cycling performance and low-temperature discharge performance.

## Description

### TECHNICAL FIELD

The present application relates to the field of electrochemical technologies, and in particular to an electrochemical device and an electronic device.

### BACKGROUND

Electrochemical devices (such as lithium-ion batteries) have become prevalent in daily life with the advancement of technology. Lithium-ion batteries have integrated into our daily lives along with technological progress and increasingly stringent environmental protection requirements. With the widespread adoption of lithium-ion batteries, their service life has garnered growing attention from users, after-sales services, battery manufacturers, and lithium battery producers, all of whom have raised new requirements for battery safety performance.

However, with the rapid popularization of lithium-ion batteries, the technologies for their product safety is not yet mature. During use, internal short circuits often occur because when the lithium-ion battery undergoes nail penetration, the positive electrode plate and the negative electrode plate come into contact with each other, or the positive electrode plate and the negative electrode plate are connected via the nail. As people gamer growing attention to the nail penetration safety performance of lithium-ion batteries, there is an urgent market demand for lithium-ion batteries with good nail penetration safety performance.

### SUMMARY

The purpose of the present application is to provide an electrochemical device and an electronic device that improve the nail penetration safety performance of the electrochemical device while achieving good cycling performance and low-temperature discharge capability of the electrochemical device.

It should be noted that in the summary of the present application, a lithium-ion battery is used as an example of the electrochemical device to explain the present application, but the electrochemical device of the present application is not limited to lithium-ion batteries. The specific technical solution is as follows:
A first aspect of the present application provides an electrochemical device, where the electrochemical device includes a positive electrode plate, the positive electrode plate includes a positive electrode current collector, a first coating layer, and a positive electrode material layer; the first coating layer is disposed on a surface of the positive electrode current collector; the positive electrode material layer is disposed on a surface of the first coating layer facing away from the positive electrode current collector; the first coating layer includes a first main material and a first binder; the first main material includes a solid-state electrolyte; a carbon material is provided on a surface of the solid-state electrolyte; the first main material has a Dv50 of 50 nm to 200 nm, preferably a Dv50 of 100 nm to 150 nm; and the first coating layer has a thickness of 0.5 µm to 2 µm, preferably a thickness of 0.5 µm to 1 µm. Compared with the prior art in which a non-solid-state electrolyte is used as the first coating layer, the present application uses a carbon-coated solid-state electrolyte as the first main material in the first coating layer, which can provide the first coating layer with a more uniform conductive network and better conductive performance. At the same time, by controlling the type and thickness of the first coating layer and the Dv50 of the first main material within the scope of the present application, a relatively dense first coating layer with high mechanical strength and good conductive performance can be formed on the surface of the positive electrode current collector, thereby improving the nail penetration safety performance of the electrochemical device while achieving good low-temperature discharge performance and cycling performance.

In one embodiment of the present application, a ratio of a thickness of the positive electrode material layer to the thickness of the first coating layer is 35 to 180. By controlling the ratio of the thickness of the positive electrode material layer to the thickness of the first coating layer within the scope of the present application, the thicknesses of the positive electrode material layer and the first coating layer can be optimized, thereby improving the nail penetration safety performance of the electrochemical device while achieving good low-temperature discharge performance and cycling performance.

In one embodiment of the present application, the solid-state electrolyte includes at least one of lithium lanthanum zirconate, lithium lanthanum titanate, or lithium aluminum titanium phosphate; and based on a mass of the first coating layer, a mass percentage of the first main material is 80% to 90%. By controlling the mass percentage of the first main material and the type of the solid-state electrolyte within the scope of the present application, the electronic conductivity of the first main material can be improved, thereby better enhancing the transport capability of lithium ions and electrons and improving the low-temperature discharge performance and cycling performance of the electrochemical device.

In one embodiment of the present application, the carbon material includes at least one of amorphous carbon, carbon nanotubes, conductive graphite, or carbon nanofibers; and based on a mass of the first main material, a mass percentage of the carbon material is 3% to 5%. By controlling the type and mass percentage of the carbon material within the scope of the present application, a suitable carbon material can be provided on the surface of the solid-state electrolyte, further improving the transport capability of lithium ions and electrons in the first coating layer, thereby improving the low-temperature discharge performance and cycling performance of the electrochemical device.

In one embodiment of the present application, the first main material has a powder resistivity of 50 Ω·cm to 100 Ω·cm. By controlling the powder resistivity of the first main material within the scope of the present application, the first main material can have an appropriate powder resistivity, improving the transport capability of lithium ions and electrons in the first main material, thereby improving the low-temperature discharge performance and cycling performance of the electrochemical device.

In one embodiment of the present application, the first binder includes a water-soluble metal salt compound; and based on a mass of the first coating layer, a mass percentage of the first binder is 10% to 20%. By controlling the mass percentage of the first binder within the scope of the present application, good interaction between the first binder and the positive electrode plate can be achieved, enhancing interfacial adhesion, thereby improving the nail penetration safety performance of the electrochemical device while achieving good low-temperature discharge performance and cycling performance.

In one embodiment of the present application, the first binder includes a water-soluble metal salt compound, and the water-soluble metal salt compound includes alkali metal polyacrylates and/or alkaline earth metal polyacrylates; where the alkali metal polyacrylates include at least one of sodium polyacrylate, lithium polyacrylate, or potassium polyacrylate; and the alkaline earth metal polyacrylates include at least one of calcium polyacrylate or magnesium polyacrylate. By controlling the type of the first binder within the scope of the present application, the first binder can have good hydrophilicity, improving the transport capability of lithium ions and electrons in the first binder while having good tensile strength and a large number of polar functional groups, thereby enhancing interfacial adhesion and achieving good low-temperature discharge performance and cycling performance while improving the nail penetration safety performance of the electrochemical device.

In one embodiment of the present application, an infrared spectrum of the first coating layer has a characteristic peak between 3200 cm⁻¹ and 3400 cm⁻¹. When the infrared spectrum of the first coating layer has this characteristic peak, hydroxyl functional groups on the surface of the solid-state electrolyte can improve affinity with the first binder, increase the cohesion of the first coating layer, and increase the adhesion between the first coating layer and the positive electrode current collector, thereby improving the nail penetration safety performance of the electrochemical device.

A second aspect of the present application provides an electronic device, where the electronic device includes the electrochemical device in any one of the foregoing embodiments. Therefore, the electronic device provided in the present application can improve the nail penetration safety performance of the electrochemical device while achieving good low-temperature discharge performance and cycling performance.

Beneficial effects of the present application:
A first aspect of the present application provides an electrochemical device, where the electrochemical device includes a positive electrode plate, the positive electrode plate includes a positive electrode current collector, a first coating layer, and a positive electrode material layer; the first coating layer is disposed on a surface of the positive electrode current collector; the positive electrode material layer is disposed on a surface of the first coating layer facing away from the positive electrode current collector; the first coating layer includes a first main material and a first binder; the first main material includes a solid-state electrolyte; a carbon material is provided on a surface of the solid-state electrolyte; the first main material has a Dv50 of 50 nm to 200 nm; and the first coating layer has a thickness of 0.5 µm to 2 µm. By controlling the type and thickness of the first coating layer and the Dv50 of the first main material within the scope of the present application, a relatively dense first coating layer with high mechanical strength and good conductive performance can be formed on the surface of the positive electrode current collector, thereby improving the nail penetration safety performance of the electrochemical device while achieving good low-temperature discharge performance and cycling performance.

Certainly, any product or method implementing the present application does not necessarily need to achieve all of the advantages described above at the same time.

### BRIEF DESCRIPTION OF ACCOMPANYING DRAWINGS

To more clearly illustrate the embodiments of the present application or the technical solutions in the prior art, the accompanying drawings required for use in the description of the embodiments or the prior art will be briefly introduced below. Obviously, the accompanying drawings in the following description are merely some embodiments of the present application, and those of ordinary skill in the art can obtain other drawings based on these drawings.
FIG. 1 is a schematic structural diagram of a positive electrode plate according to one embodiment of the present application;
FIG. 2 is an infrared spectrum test chart of a first coating layer in Example 1; and
FIG. 3 is an infrared spectrum test chart of a first coating layer in Example 22.

Reference signs:
11: positive electrode current collector; 12: first coating layer; 13: positive electrode material layer.

### DETAILED DESCRIPTION OF EMBODIMENTS

The technical solutions in the present application will be clearly and completely described below with reference to the embodiments and accompanying drawings of the present application. Obviously, the described embodiments are merely some rather than all of the embodiments of the present application. All other embodiments obtained by those of ordinary skill in the art based on the present application fall within the scope of protection of the present application.

It should be noted that in the specific embodiments of the present application, a lithium-ion battery is used as an example of the electrochemical device to explain the present application, but the electrochemical device of the present application is not limited to lithium-ion batteries.

The present application provides an electrochemical device, where the electrochemical device includes a positive electrode plate, the positive electrode plate includes a positive electrode current collector, a first coating layer, and a positive electrode material layer; the first coating layer is disposed on a surface of the positive electrode current collector; the positive electrode material layer is disposed on a surface of the first coating layer facing away from the positive electrode current collector; the first coating layer includes a first main material and a first binder; the first main material includes a solid-state electrolyte; a carbon material is provided on a surface of the solid-state electrolyte; the first main material has a Dv50 of 50 nm to 200 nm, preferably a Dv50 of 100 nm to 150 nm; exemplarily, the Dv50 may be 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or in a range composed of any two of these values; and the first coating layer has a thickness of 0.5 µm to 2 µm, preferably a thickness of 0.5 µm to 1 µm; exemplarily, the thickness of the first coating layer may be 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, or in a range composed of any two of these values.

Through research, the inventors have found that the contact between the positive electrode material layer and the positive electrode current collector can be improved by disposed a first coating layer between the positive electrode current collector and the positive electrode material layer, thereby improving low-temperature discharge performance and cycling performance. Meanwhile, the disposed first coating layer can also serve as a safety layer to improve the nail penetration safety performance of the electrochemical device. The first coating layer includes a first main material and a first binder; the first main material includes a solid-state electrolyte; and a carbon material is provided on a surface of the solid-state electrolyte. The use of the solid-state electrolyte as the first main material can enhance the transport capability of lithium ions and electrons between the positive electrode material layer and the positive electrode current collector, thereby improving the low-temperature discharge performance of the electrochemical device. In addition, the arrangement of the carbon material on the surface of the main material can further improve the electron transport capability of the functional coating and increase conductive channels during cycling of the electrochemical device, thereby improving the cycling performance of the electrochemical device. Reducing the particle size Dv50 of the first main material to the nanoscale level can increase the packing density between particles of the first main material, form a relatively dense first coating layer on the surface of the positive electrode current collector, enhance the protective effect on the positive electrode current collector during nail penetration tests, wrap metal burrs that may be generated on the positive electrode current collector during nail penetration tests, reduce the occurrence of internal short circuits in the electrochemical device, lower the probability of thermal runaway caused by local overheating of the electrochemical device, and improve the nail penetration safety performance of the electrochemical device. When the Dv50 of the first main material is greater than 200 nm, the particles of the first main material with excessively large particle size are prone to piercing the positive electrode current collector during nail penetration tests, resulting in a poor protective effect on the positive electrode current collector. When the Dv50 of the first main material is less than 50 nm, the process difficulty is relatively high, the manufacturing cost is relatively high, and there are more side reactions between the positive electrode plate and the electrolytic solution, leading to a decrease in the cycling performance of the electrochemical device. When the thickness of the first coating layer is within the scope of the present application, the first coating layer has high mechanical strength, and can protect the positive electrode current collector during nail penetration tests, reduce the occurrence of internal short circuits in the electrochemical device, lower the probability of thermal runaway caused by local overheating of the electrochemical device, and improve the nail penetration safety performance of the electrochemical device. When the thickness of the first coating layer is less than 0.5 µm, the nail penetration safety performance of the electrochemical device is relatively low. When the thickness of the first coating layer is greater than 2 µm, the volumetric energy density of the electrochemical device is relatively low, thereby leading to a decrease in the cycling performance of the electrochemical device. By controlling the type and thickness of the first coating layer and the Dv50 of the first main material within the scope of the present application, a relatively dense first coating layer with high mechanical strength and good conductive performance can be formed on the surface of the positive electrode current collector, thereby improving the nail penetration safety performance of the electrochemical device while achieving good low-temperature discharge performance and cycling performance.

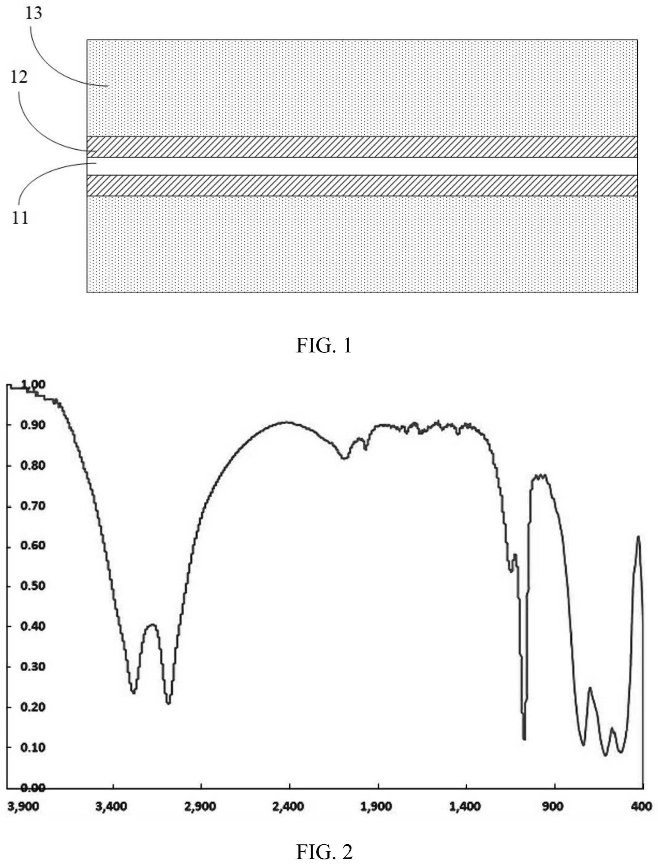

In the present application, the above "the first coating layer is disposed on a surface of the positive electrode current collector" means that the first coating layer may be disposed on one surface of the positive electrode current collector in a thickness direction thereof or on two surfaces of the positive electrode current collector in a thickness direction thereof. It should be noted that the "surface" herein may be the entire area of the positive electrode current collector or a partial area of the positive electrode current collector, which is not particularly limited in the present application as long as the purpose of the present application can be achieved. Specifically, as shown in FIG. 1, a first coating layer 12 and a positive electrode material layer 13 are sequentially laminated on each of two surfaces of a positive electrode current collector 11. The above "the positive electrode material layer is disposed on a surface of the first coating layer facing away from the positive electrode current collector" is understood accordingly.

In the present application, Dv50 represents a particle size at which the cumulative volume percentage reaches 50% from the small particle size side in a volume-based particle size distribution of the first main material.

In one embodiment of the present application, a ratio of a thickness of the positive electrode material layer to the thickness of the first coating layer is 35 to 180; exemplarily, the ratio of the thickness of the positive electrode material layer to the thickness of the first coating layer may be 35, 50, 70, 100, 150, 180, or in a range composed of any two of these values. By controlling the ratio of the thickness of the positive electrode material layer to the thickness of the first coating layer within the scope of the present application, the thicknesses of the positive electrode material layer and the first coating layer can be optimized, thereby improving the nail penetration safety performance of the electrochemical device while achieving good low-temperature discharge performance and cycling performance.

In one embodiment of the present application, the positive electrode material layer has a thickness of 70 µm to 90 µm; exemplarily, the thickness of the positive electrode material layer may be 70 µm, 80 µm, 90 µm, or in a range composed of any two of these values.

In one embodiment of the present application, the solid-state electrolyte includes at least one of lithium lanthanum zirconate (Li₇La₃Zr₂O₁₂), lithium lanthanum titanate (Li₃ₓLa_{2/3-x}TiO₃, where 0 < x < 0.16), or lithium aluminum titanium phosphate; where lithium lanthanum titanate may include, but is not limited to, Li_{0.33}La_{0.56}TiO₃; and lithium aluminum titanium phosphate may include, but is not limited to, lithium aluminum titanium phosphate Li_{1.3}Al_{0.3}Ti_{1.7}(PO₄)₃. Based on a mass of the first coating layer, a mass percentage of the first main material is 80% to 90%; exemplarily, the mass percentage of the first main material may be 80%, 81%, 82%, 83%, 84%, 85%, 86%, 87%, 88%, 89%, 90%, or in a range composed of any two of these values. By controlling the mass percentage of the first main material and the type of the solid-state electrolyte within the scope of the present application, the electronic conductivity of the first main material can be improved, thereby better enhancing the transport capability of lithium ions and electrons and improving the low-temperature discharge performance and cycling performance of the electrochemical device.

In one embodiment of the present application, the carbon material includes at least one of amorphous carbon, carbon nanotubes, conductive graphite, or carbon nanofibers. The carbon nanotubes may include, but are not limited to, at least one of single-walled carbon nanotubes or multi-walled carbon nanotubes. Based on a mass of the first main material, a mass percentage of the carbon material is 3% to 5%; exemplarily, the mass percentage of the carbon material may be 3.0%, 3.2%, 3.4%, 3.6%, 3.8%, 4.0%, 4.2%, 4.4%, 4.6%, 4.8%, 5.0%, or in a range composed of any two of these values. By controlling the type and mass percentage of the carbon material within the scope of the present application, a suitable carbon material can be provided on the surface of the solid-state electrolyte, further improving the transport capability of lithium ions and electrons in the first coating layer, thereby improving the low-temperature discharge performance and cycling performance of the electrochemical device.

The present application has no particular limitation on the preparation method of the solid-state electrolyte as long as the purpose of the present application can be achieved. Exemplarily, the preparation method of the solid-state electrolyte may include, but is not limited to, the following steps: dispersing lithium lanthanum zirconate, lithium lanthanum titanate, or lithium aluminum titanium phosphate powders in an ethanol solution containing a silane coupling agent to obtain a suspension; heating the suspension at 25°C to 100°C for 1 to 6 hours; filtering the product; washing with deionized water and ethanol multiple times; and then drying in a drying oven at 70°C to 90°C for 10 to 12 hours to obtain a solid-state electrolyte having hydroxyl functional groups on the surface thereof. The silane coupling agent may include, but is not limited to, at least one of 3-aminopropyltriethoxysilane (APTES) or 3-glycidoxypropyltrimethoxysilane (GPTS); and a mass ratio of lithium lanthanum zirconate, lithium lanthanum titanate, or lithium aluminum titanium phosphate to the silane coupling agent is 99:1 to 90: 10.

The present application has no particular limitation on the preparation method of the first main material as long as the purpose of the present application can be achieved. Exemplarily, the preparation method of the first main material may include, but is not limited to, the following steps: mixing the solid-state electrolyte and a carbon source in a mass ratio of 85:2 to 85:4; adding water; stirring and dispersing uniformly to obtain a mixed solution; evaporating the mixed solution to dryness at 80°C to 120°C to remove the solvent; heat-treating at 500°C to 700°C under a nitrogen atmosphere for 7 h to 9 h; cooling; and grinding to obtain the first main material. When the carbon material provided on the surface of the solid-state electrolyte is any one of carbon nanotubes, conductive graphite, or carbon nanofibers, the above carbon material may be directly added as the carbon source. When the carbon material provided on the surface of the solid-state electrolyte is amorphous carbon, the above carbon source may be conductive carbon black or an organic carbon compound. Exemplarily, the organic carbon compound may include, but is not limited to, at least one of citric acid, glucose, sucrose, or polyacrylic acid, and the organic carbon compound is subjected to the above heat treatment to yield amorphous carbon.

The present application has no particular limitation on the method for regulating the mass percentage of the carbon material based on the mass of the first main material, for example, the mass percentage of the carbon material based on the mass of the first main material may be regulated by controlling a mass ratio of the solid-state electrolyte to the carbon material. When the mass ratio of the solid-state electrolyte to the carbon material decreases, the mass percentage of the carbon material based on the mass of the first main material increases. When the mass ratio of the solid-state electrolyte to the carbon material increases, the mass percentage of the carbon material based on the mass of the first main material decreases.

The present application has no particular limitation on the method for regulating the Dv50 of the first main material, for example, the Dv50 of the first main material may be regulated by controlling grinding time. When the grinding time is reduced, the Dv50 of the first main material increases. When the grinding time is increased, the Dv50 of the first main material decreases.

The present application has no particular limitation on the method for regulating the powder resistivity of the first main material, for example, the powder resistivity of the first main material may be regulated by controlling a mass ratio of the solid-state electrolyte to the carbon material. When the mass ratio of the solid-state electrolyte to the carbon material decreases, the powder resistivity of the first main material increases. When the mass ratio of the solid-state electrolyte to the carbon material increases, the powder resistivity of the first main material decreases.

In one embodiment of the present application, the first main material has a powder resistivity of 50 Ω·cm to 100 Ω·cm; exemplarily, the powder resistivity of the first main material may be 50 Ω·cm, 55 Ω·cm, 60 Ω·cm, 65 Ω·cm, 70 Ω·cm, 75 Ω·cm, 80 Ω·cm, 85 Ω·cm, 90 Ω·cm, 95 Ω·cm, 100 Ω·cm, or in a range composed of any two of these values. By controlling the powder resistivity of the first main material within the scope of the present application, the first main material can have an appropriate powder resistivity, improving the transport capability of lithium ions and electrons in the first main material, thereby improving the low-temperature discharge performance and cycling performance of the electrochemical device.

In one embodiment of the present application, the first binder includes a water-soluble metal salt compound; and based on a mass of the first coating layer, a mass percentage of the first binder is 10% to 20%; exemplarily, the mass percentage of the first binder may be 10%, 11%, 12%, 13%, 14%, 15%, 16%, 17%, 18%, 19%, 20%, or in a range composed of any two of these values. By controlling the mass percentage of the first binder within the scope of the present application, good interaction between the first binder and the positive electrode plate can be achieved, enhancing interfacial adhesion, thereby improving the nail penetration safety performance of the electrochemical device while achieving good low-temperature discharge performance and cycling performance.

In one embodiment of the present application, the first binder includes a water-soluble metal salt compound, and the water-soluble metal salt compound includes alkali metal polyacrylates and/or alkaline earth metal polyacrylates; where the alkali metal polyacrylates include at least one of sodium polyacrylate, lithium polyacrylate, or potassium polyacrylate; and the alkaline earth metal polyacrylates include at least one of calcium polyacrylate or magnesium polyacrylate. By controlling the type of the first binder within the scope of the present application, the first binder can have good hydrophilicity, improving the transport capability of lithium ions and electrons in the first binder while having good tensile strength and a large number of polar functional groups, thereby enhancing interfacial adhesion and achieving good low-temperature discharge performance and cycling performance while improving the nail penetration safety performance of the electrochemical device.

In one embodiment of the present application, an infrared spectrum of the first coating layer has a characteristic peak between 3200 cm⁻¹ and 3400 cm⁻¹. When the infrared spectrum of the first coating layer has this characteristic peak, it indicates that the surface of the solid-state electrolyte has hydroxyl functional groups, which can form hydrogen bonds or covalent bonds with carboxyl groups in the first binder, improving affinity with the first binder, increasing the cohesion of the first coating layer, and increasing the adhesion between the first coating layer and the positive electrode current collector, thereby improving the nail penetration safety performance of the electrochemical device.

The present application has no particular limitation on the preparation method of the positive electrode plate as long as the purpose of the present application can be achieved. For example, the preparation method of the positive electrode plate may include, but is not limited to, the following steps: mixing the solid-state electrolyte and the first binder in a mass ratio of (80 to 90):(10 to 20); adding deionized water as a solvent; stirring uniformly to prepare a first coating layer slurry with a solid content of 70wt% to 80wt%; applying the first coating layer slurry on one surface of a positive electrode current collector of 5 µm to 20 µm; and baking at 90°C to 180°C for 1 h to 3 h to obtain a first coating layer with a thickness of 0.5 µm to 2 µm. Then, a positive electrode material layer slurry is prepared; the positive electrode material layer slurry is applied on the surface of the first coating layer; and drying is performed to obtain a positive electrode plate with the first coating layer and the positive electrode material layer coated on one side. The above steps are repeated on the other surface of the positive electrode current collector to obtain a positive electrode plate with the first coating layer and the positive electrode material layer coated on both sides.

During preparation of the first coating layer, the first binder baked at 90°C to 180°C can increase the cohesion of the first coating layer and the adhesion between the first coating layer and the positive electrode current collector. The reasons are as follows: on the one hand, under high temperature, carboxyl groups in the first binder (for example, sodium polyacrylate) and hydroxyl groups in the solid-state electrolyte (for example, lithium aluminum titanium phosphate) undergo a dehydration reaction, and water molecules generated during the reaction can promote the reaction between the first binder and the hydroxyl groups on the surface of the solid-state electrolyte to form stable chemical bonds (for example, ester bonds); on the other hand, an oxide layer (for example, an aluminum oxide layer for aluminum foil) usually exists on the surface of the positive electrode current collector, and under high temperature, the first binder (for example, sodium polyacrylate) can react with the above oxide to generate a more stable compound, thereby increasing the cohesion of the first coating layer and the adhesion between the first coating layer and the positive electrode current collector.

The present application has no particular limitation on the positive electrode current collector as long as the purpose of the present application can be achieved, for example, the positive electrode current collector may include aluminum foil, aluminum alloy foil, or a composite current collector (for example, an aluminum-carbon composite current collector).

The positive electrode material layer includes a positive electrode active material. The present application has no particular limitation on the positive electrode active material as long as the purpose of the present application can be achieved, for example, the positive electrode active material may include, but is not limited to, at least one of lithium nickel cobalt manganese oxide (for example, NCM811, NCM622, NCM523, NCM111), lithium nickel cobalt aluminum oxide, lithium iron phosphate, lithium-rich manganese-based material, lithium cobalt oxide (LiCoO₂), lithium manganese oxide, lithium iron manganese phosphate, or lithium titanate.

The positive electrode material layer may further include a conductive agent and a second binder. The present application has no particular limitation on the types of the conductive agent and the second binder as long as the purpose of the present application can be achieved. For example, the conductive agent may include, but is not limited to, at least one of conductive carbon black (Super P), carbon nanotubes (CNTs), carbon fibers, flake graphite, graphene, a metal material, or a conductive polymer; where the conductive carbon black may include, but is not limited to, at least one of acetylene black or Ketjen black; the carbon nanotubes may include, but are not limited to, single-walled carbon nanotubes and/or multi-walled carbon nanotubes; the carbon fibers may include, but are not limited to, vapor-grown carbon fibers (VGCF) and/or nano-carbon fibers; the metal material may include, but is not limited to, metal powder and/or metal fibers, and specifically, the metal may include, but is not limited to, at least one of copper, nickel, aluminum, or silver; and the conductive polymer may include, but is not limited to, at least one of polyphenylene derivatives, polyaniline, polythiophene, polyacetylene, or polypyrrole. For example, the second binder may include, but is not limited to, at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamide-imide, styrene-butadiene rubber, or polyvinylidene fluoride. The present application has no particular limitation on the mass ratio of the positive electrode active material, the conductive agent, and the second binder in the positive electrode material layer, and those skilled in the art may select according to actual needs as long as the purpose of the present application can be achieved.

The present application has no particular limitation on the thickness of the positive electrode current collector as long as the purpose of the present application can be achieved. For example, the thickness of the positive electrode current collector is 5 µm to 10 µm.

In the present application, the electrochemical device further includes a negative electrode plate, where the negative electrode plate includes a negative electrode current collector and a negative electrode material layer disposed on at least one surface of the negative electrode current collector. The above "the negative electrode plate includes a negative electrode current collector and a negative electrode material layer disposed on at least one surface of the negative electrode current collector" means that the negative electrode material layer may be disposed on one surface of the negative electrode current collector in a thickness direction thereof or on two surfaces of the negative electrode current collector in a thickness direction thereof. It should be noted that the "surface" herein may be the entire area of the surface of the negative electrode current collector or a partial area of the surface of the negative electrode current collector, which is not particularly limited in the present application as long as the purpose of the present application can be achieved.

The present application has no particular limitation on the negative electrode current collector as long as the purpose of the present application can be achieved, for example, the negative electrode current collector may include copper foil, copper alloy foil, nickel foil, stainless steel foil, titanium foil, foamed nickel, foamed copper, or a composite current collector; exemplarily, the composite current collector may be a lithium-copper composite current collector, a carbon-copper composite current collector, a nickel-copper composite current collector, or a titanium-copper composite current collector.

The negative electrode material layer includes a negative electrode active material. The present application has no particular limitation on the negative electrode active material as long as the purpose of the present application can be achieved, for example, the negative electrode active material may include, but is not limited to, at least one of natural graphite, artificial graphite, mesocarbon microbeads, hard carbon, soft carbon, silicon, silicon-carbon composite, Li-Sn alloy, Li-Sn-O alloy, Sn, SnO, SnO₂, spinelstructured lithiated TiO₂-Li₄Ti₅O₁₂, or Li-Al alloy.

In some embodiments of the present application, the negative electrode material layer may further include a conductive agent and a second binder, for example, at least one of the conductive agent and the second binder mentioned above. The present application has no particular limitation on the mass ratio of the negative electrode active material, the conductive agent, and the second binder in the negative electrode material layer, and those skilled in the art may select according to actual needs as long as the purpose of the present application can be achieved.

The present application has no particular limitation on the thickness of the negative electrode material layer and the thickness of the negative electrode current collector as long as the purpose of the present application can be achieved, for example, the thickness of the negative electrode material layer is 80 µm to 100 µm, and the thickness of the negative electrode current collector is 4 µm to 15 µm.

Optionally, the negative electrode plate may further include a conductive layer, where the conductive layer is located between the negative electrode current collector and the negative electrode material layer. The present application has no particular limitation on the composition of the conductive layer, which may be a conductive layer commonly used in the art. For example, the conductive layer includes a conductive agent and a second binder. The present application has no particular limitation on the conductive agent and the second binder in the conductive layer, for example, at least one of the conductive agent and the second binder mentioned above.

In the present application, the electrochemical device further includes a separator. The present application has no particular limitation on the separator as long as the purpose of the present application can be achieved. For example, the material of the separator may include, but is not limited to, at least one of polyethylene (PE), polyolefin (PO)-based materials mainly including polypropylene (PP), polyester (for example, polyethylene terephthalate (PET) film), cellulose, polyimide (PI), polyamide (PA), spandex, or aramid. The type of the separator may include at least one of a woven film, a non-woven film, a microporous film, a composite film, a calendered film, or a spunbond film.

In some embodiments of the present application, the separator may include a substrate layer and a surface treatment layer. The substrate layer may be a non-woven fabric or a composite film having a porous structure, and the material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used.

Optionally, the surface treatment layer is provided on at least one surface of the substrate layer, and the surface treatment layer may be a polymer layer or an inorganic material layer, or a layer formed by mixing a polymer and an inorganic material.

In some embodiments of the present application, the inorganic material layer includes ceramic particles and a second binder. The present application has no particular limitation on the ceramic particles, for example, the ceramic particles may include at least one of silicon dioxide, magnesium oxide, titanium dioxide, hafnium dioxide, tin dioxide, cerium dioxide, nickel oxide, zinc oxide, calcium oxide, zirconium oxide, yttrium oxide, silicon carbide, aluminum hydroxide, magnesium hydroxide, calcium hydroxide, or barium sulfate. The present application has no particular limitation on the second binder, for example, it may be at least one of the second binders mentioned above. In some embodiments of the present application, the polymer layer includes a polymer, and the material of the polymer includes at least one of polyamide, polyacrylonitrile, acrylate polymers, polyacrylic acid, polyacrylate, polyvinylpyrrolidone, polyvinyl ether, polyvinylidene fluoride, or poly(vinylidene fluoride-hexafluoropropylene).

In the present application, the thickness of the separator is not particularly limited as long as the purpose of the present application can be achieved, for example, the thickness of the separator may be 3 µm to 30 µm.

In the present application, the electrochemical device further includes an electrolytic solution, where the electrolytic solution includes a lithium salt and a non-aqueous solvent.

The present application has no particular limitation on the lithium salt as long as the purpose of the present application can be achieved. For example, the lithium salt may include, but is not limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. The present application has no particular limitation on the content of the lithium salt in the electrolytic solution as long as the purpose of the present application can be achieved.

The present application has no particular limitation on the non-aqueous solvent as long as the purpose of the present application can be achieved, for example, the non-aqueous solvent may include, but is not limited to, at least one of a carbonate compound, a carboxylate compound, an ether compound, or other organic solvents.

The carbonate compound may include, but is not limited to, at least one of a chain carbonate compound, a cyclic carbonate compound, or a fluorinated carbonate compound. The chain carbonate compound may include, but is not limited to, at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compound may include, but is not limited to, at least one of ethylene carbonate (EC), propylene carbonate (PC), butylene carbonate (BC), or vinyl ethylene carbonate (VEC). The fluorinated carbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The present application has no particular limitation on the content of the non-aqueous solvent in the electrolytic solution as long as the purpose of the present application can be achieved.

The electrochemical device further includes a casing for accommodating the positive electrode plate, the separator, the negative electrode plate, the electrolytic solution, and other components known in the field of electrochemical devices, and the present application does not limit the above other components. The present application has no particular limitation on the casing, which may be a casing known in the art as long as the purpose of the present application can be achieved. For example, the casing may be a hard casing or a flexible casing. The material of the hard casing may be metal, and the present application does not limit the type of metal, and a metal hard casing known in the art may be used as long as the purpose of the present application can be achieved. The flexible casing may be a metal-plastic film, for example, an aluminum-plastic film or a steel-plastic film.

The preparation process of the electrochemical device of the present application is well known to those skilled in the art, and the present application has no particular limitation thereon. For example, the preparation process of the electrochemical device may include, but is not limited to, the following steps: stacking the positive electrode plate, the separator, and the negative electrode plate in order, and performing operations such as winding or folding as needed to obtain an electrode assembly with a wound structure; placing the electrode assembly into a casing; injecting the electrolytic solution into the casing; and sealing to obtain the electrochemical device. Alternatively, the positive electrode plate, the separator, and the negative electrode plate are stacked in order, and then the four corners of the entire laminated structure are fixed with tape to obtain an electrode assembly with a laminated structure; the electrode assembly is placed into a casing; the electrolytic solution is injected into the casing; and sealing is performed to obtain the electrochemical device. In addition, an overcurrent prevention element, a guide plate, or the like may be placed in the casing as needed to prevent pressure rise, overcharge, and overdischarge inside the electrochemical device.

A second aspect of the present application provides an electronic device, where the electronic device includes the electrochemical device in any one of the foregoing embodiments. Therefore, the electronic device provided in the present application has good nail penetration safety performance, low-temperature discharge performance, and cycling performance.

The electronic device of the present application is not particularly limited and may be any electronic device known in the prior art. In some embodiments, the electronic device may include, but is not limited to, a notebook computer, a pen-input computer, a mobile computer, an electronic book player, a portable telephone, a portable fax machine, a portable copier, a portable printer, a head-mounted stereo headset, a video recorder, a liquid crystal television, a portable cleaner, a portable CD player, a mini disc, a transceiver, an electronic organizer, a calculator, a memory card, a portable recorder, a radio, a backup power supply, a motor, an automobile, a motorcycle, a power-assisted bicycle, a bicycle, a lighting fixture, a toy, a game console, a clock, a power tool, a flashlight, a camera, a large household storage battery, and a lithium-ion capacitor.

### Examples

The embodiments of the present application will be described more specifically below by way of examples and comparative examples. Various tests and evaluations were performed according to the following methods. In addition, unless otherwise specified, "parts" and "%" are on a mass basis.

### Test methods and equipment:

### Test for thickness of first coating layer

The positive electrode plate was subjected to plasma longitudinal cutting along a thickness direction thereof, polished using argon ion polishing technology to obtain a flat cross-section, and then observed and measured for the thickness of the first coating layer at three positions using a scanning electron microscope (OXFORD·EDS) at a magnification of 40,000 times, and the average value was taken as the thickness of the first coating layer.

### Test for particle size

The particle size of the first main material was measured using a Malvern particle size tester (model: MasterSizer 2000). 0.02 g of the first main material was added to a 50 mL clean beaker, 20 mL of dispersant ethanol was added, ultrasonic treatment was performed in a 120 W ultrasonic cleaner for 30 min to fully disperse the first main material in ethanol to obtain a sample dispersion, and the sample dispersion was tested using the Malvern particle size tester to obtain the particle size Dv50 of the first main material.

### Nail penetration test

10 lithium-ion batteries from the examples were taken, charged at a constant current of 0.5C to 4.5 V at 25±3°C, and then charged at a constant voltage to a cutoff current of 0.05C to obtain fully charged lithium-ion batteries. Next, a steel nail with a diameter of 4 mm, made of carbon steel, with a taper of 16.5 mm and a total length of 100 mm was used to perform a nail penetration test on the fully charged lithium-ion batteries at 25±3°C, with a nail penetration speed of 30 mm/s and a nail penetration depth such that the taper of the steel nail passed through the lithium-ion battery. The state of the lithium-ion batteries during the test was observed, and no combustion or explosion of the lithium-ion batteries was used as the criterion for passing the nail penetration test, the number of lithium-ion batteries that passed the nail penetration test was recorded, and the safety performance of the lithium-ion batteries was characterized by the nail penetration test pass rate. A higher nail penetration test pass rate indicates better safety performance of the lithium-ion batteries. Nail penetration test pass rate = number of lithium-ion batteries that passed the nail penetration test / 10.

### Cycling performance test

The lithium-ion batteries were left to stand for 30 min in an environment of 45°C±3°C, charged at a constant current of 1.25C to 4.25 V, charged at a constant current of 1.5C to 4.5 V, then charged at a constant voltage of 4.5 V to 0.05C, left to stand for 30 min, and next discharged at a constant current of 0.7C to 3.0 V. The discharge capacity obtained in this step was taken as the initial capacity. The above cycle was repeated, the ratio of the discharge capacity of each step to the initial capacity was taken to obtain the discharge capacity retention rate of each step, the number of cycles of the lithium-ion batteries at 45°C±3°C until the discharge capacity retention rate reached 80% was recorded, and the number of cycles at 45°C±3°C until the capacity retention rate reached 80% was taken as the cycling performance of the lithium-ion batteries. A higher number of cycles of the lithium-ion batteries at 45°C±3°C until the capacity retention rate reaches 80% indicates better cycling performance of the lithium-ion batteries.

### Low-temperature discharge performance test

The lithium-ion batteries were left to stand for 5 min in an environment of 25°C±3°C, charged at a constant current of 1.5C to 4.5 V, then charged at a constant voltage to a cutoff current of 0.02C, and next, discharged at a constant current of 0.2C to 3.0 V in the same environment of 25°C±3°C. The initial discharge capacity when discharged to 3.0 V was recorded.

The lithium-ion batteries were left to stand for 5 min in an environment of 25°C±3°C, charged at a constant current of 1.5C to 4.5 V, and then charged at a constant voltage to a cutoff current of 0.02C. The furnace temperature was adjusted to -10°C. The lithium-ion batteries were left to stand for 60 min; and discharged at a constant current of 0.2C to 3.0 V. The low-temperature discharge capacity when discharged to 3.0 V was recorded. A higher low-temperature discharge capacity retention rate of the lithium-ion batteries at -10°C indicates better low-temperature discharge performance of the lithium-ion batteries.
-10°C low-temperature discharge capacity retention rate = (low-temperature discharge capacity / initial discharge capacity) × 100%.

### Powder resistivity test

The lithium-ion batteries were discharged at 0.2C to 3 V, and then disassembled to take out the positive electrode plate, the positive electrode material layer was scraped off with a knife, the first coating layer was scraped off from the positive electrode current collector to obtain first coating layer powder, the first coating layer powder was heated at 400°C in air to obtain the first main material, and the powder resistivity of the first main material was tested in a dry room using a powder resistivity tester to obtain the powder resistivity ρ of the first main material.

### Infrared spectrum test

The lithium-ion batteries were discharged at a constant current of 0.1C to 3.0 V, and disassembled to obtain the positive electrode plate, the positive electrode plate was cleaned with dimethyl carbonate (DMC) for 10 min, and then the positive electrode plate was baked at 100°C for 2 h for later use. The positive electrode material layer on the positive electrode plate was scraped off to obtain a positive electrode current collector with the first coating layer on the surface.

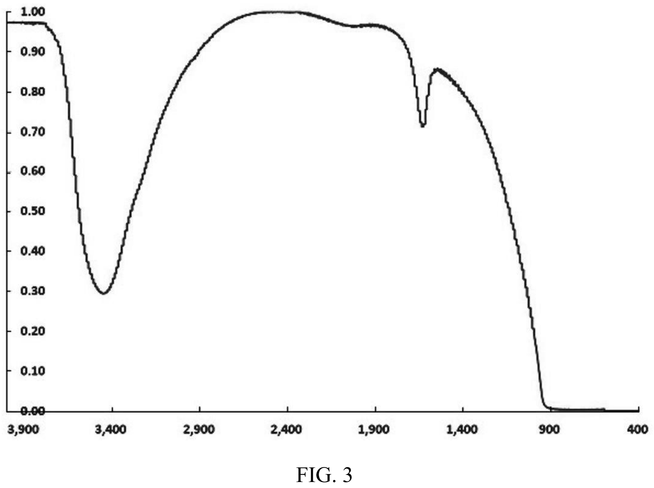

An infrared spectrum analyzer (model: Nicolet iS50) was used to test the infrared spectrum of the positive electrode current collector coated with the first coating layer using the potassium bromide (KBr) pellet method. FIG. 2 is an infrared spectrum test chart of the first coating layer in Example 1, and FIG. 3 is an infrared spectrum test chart of the first coating layer in Example 22.

### Test for content of Carbon material

The lithium-ion batteries were discharged at a constant current of 0.2C to 3 V, and disassembled to obtain the positive electrode plate, and the positive electrode material layer on the positive electrode plate was scraped off to obtain a positive electrode current collector with the first coating layer on the surface. The positive electrode current collector was cut into 10 samples of 48 mm × 60 mm, the samples were heated at 400°C in air, cleaned and dried, then the content of carbon element in the 10 samples was tested using an inductively coupled plasma analyzer (ICP, model: AVIO-200), and the average value was taken to obtain the content of the carbon material in the first main material.

### Example 1

### <Preparation of solid-state electrolyte>

Lithium aluminum titanium phosphate powder was dispersed in an ethanol solution containing 3-aminopropyltriethoxysilane, with a mass ratio of lithium aluminum titanium phosphate to 3-aminopropyltriethoxysilane of 95:5, to prepare a suspension; the suspension was heated at 75°C for 4 hours; and the product was filtered, washed multiple times with deionized water and ethanol, and then dried in a drying oven at 80°C for 12 hours to obtain a solid-state electrolyte having hydroxyl functional groups on the surface thereof.

### <Preparation of first main material>

The solid-state electrolyte prepared above and citric acid were mixed in a mass ratio of 85:3, water was added, the mixture was stirred and dispersed uniformly to prepare a mixed solution; the mixed solution was evaporated at 100°C to remove the solvent, heat-treated at 600°C under a nitrogen atmosphere for 8 h, cooled, and ground to obtain the first main material. Citric acid was subjected to the above heat treatment to obtain amorphous carbon; the first main material had a Dv50 of 150 nm and a powder resistivity ρ of 50.02 Ω·cm, and the carbon material had a mass percentage W_{C} of 4% based on the mass of the first main material.

### <Preparation of positive electrode plate>

The first main material prepared above and a first binder sodium polyacrylate were mixed in a mass ratio of 85:15, deionized water was added as a solvent, and the mixture was stirred uniformly to prepare a first coating layer slurry with a solid content of 75wt%. The first coating layer slurry was applied on one surface of a 10 µm positive electrode current collector aluminum foil and baked at 120°C for 2 hours to obtain a first coating layer. Lithium cobalt oxide as a positive electrode active material, polyvinylidene fluoride as a second binder, and conductive carbon black as a conductive agent were mixed in a mass ratio of 97.3:1.6:1.1, N-methylpyrrolidone (NMP) was added as a solvent, and the mixture was stirred uniformly under the action of a vacuum mixer to prepare a positive electrode slurry with a solid content of 75wt%. The positive electrode slurry was evenly applied on the surface of the first coating layer, and dried at 120°C to obtain a positive electrode plate with the first coating layer and a positive electrode material layer coated on one side, with a coating weight of the positive electrode active layer of 267.8 mg/1540 mm². Then, the above steps were repeated on the other surface of the aluminum foil, and drying was performed at 120°C to obtain a positive electrode plate with the first coating layer and the positive electrode material layer coated on two sides. Then, cold pressing, cutting, and tab welding were performed to obtain a positive electrode plate with specifications of 74 mm × 867 mm for later use. Based on a mass of the first coating layer, a mass percentage W₁ of the first main material was 85%, and a mass percentage W₂ of the first binder was 15%; the first coating layer had a thickness D₁ of 1 µm, a single-side positive electrode material layer had a thickness D₂ of 85 µm, and a ratio D₂/D₁ of the thickness of the positive electrode material layer to the thickness of the first coating layer was 85.

The schematic structural diagram of the positive electrode plate prepared in Example 1 is shown in FIG. 1.

### <Preparation of negative electrode plate>

Artificial graphite as a negative electrode active material, styrene-butadiene rubber (SBR) as a second binder, and carboxymethyl cellulose (CMC) as a second binder were mixed in a mass ratio of 97.7:1:1.3, deionized water was added as a solvent to prepare a slurry with a solid content of 70wt%, and the mixture was stirred uniformly in a vacuum mixer to obtain a negative electrode slurry. The negative electrode slurry was evenly applied on one surface of a 6 µm-thick negative electrode current collector copper foil, dried at 120°C to obtain a negative electrode plate with a negative electrode material layer coated on one side, with a coating weight of the negative electrode material layer of 142 mg/1540 mm². Then, the above steps were repeated on the other surface of the copper foil to obtain a negative electrode plate with the negative electrode material layer coated on two sides. After drying at 120°C, cold pressing, cutting, and tab welding were performed to obtain a negative electrode plate with specifications of 78 mm × 875 mm for later use. The single-side negative electrode material layer had a thickness of 80 µm.

### <Preparation of electrolytic solution>

In an argon atmosphere glove box with a water content of less than 10 ppm, carbonate compounds ethylene carbonate (EC), propylene carbonate (PC), and diethyl carbonate (DEC) were uniformly mixed in a mass ratio of 10:30:60 to obtain a base solvent, lithium salt LiPF₆ was added, and the mixture was stirred uniformly to obtain an electrolytic solution. Based on a total mass of the electrolytic solution, a mass percentage of the lithium salt LiPF₆ was 12.5%, and the balance was the base solvent.

### <Separator>

A polyethylene porous polymer film with a thickness of 8 µm (manufacturer: Celgard Separator Co., Ltd., USA) was used as the separator.

### <Preparation of lithium-ion battery>

The positive electrode plate, the separator, and the negative electrode plate were stacked in order, with the separator positioned between the positive electrode plate and the negative electrode plate for isolation, the stack was wound to obtain an electrode assembly, and the electrode assembly was placed into an aluminum-plastic film packaging bag, dehydrated at 80°C, injected with the prepared electrolytic solution, and subjected to vacuum packaging, standing, formation, and shaping processes to obtain a lithium-ion battery.

During the formation, the upper limit voltage was 4.53 V, the temperature was 85°C, and the duration was 50 min.

### Example 2

The same as Example 1 except that <Preparation of solid-state electrolyte> was replaced with the following steps.

### <Preparation of solid-state electrolyte>

Lithium lanthanum zirconate powder was dispersed in an ethanol solution containing 3-aminopropyltriethoxysilane to prepare a suspension; the suspension was heated at 75°C for 4 hours; and the product was filtered, washed multiple times with deionized water and ethanol, and then dried in a drying oven at 80°C for 12 hours to prepare a solid-state electrolyte having hydroxyl functional groups on the surface thereof.

### Example 3

The same as Example 1 except that <Preparation of solid-state electrolyte> was replaced with the following steps.

### <Preparation of solid-state electrolyte>

Lithium lanthanum titanate Li_{0.33}La_{0.56}TiO₃ powder was dispersed in an ethanol solution containing 3-aminopropyltriethoxysilane to prepare a suspension; the suspension was heated at 75°C for 4 hours; and the product was filtered, washed multiple times with deionized water and ethanol, and then dried in a drying oven at 80°C for 12 hours to prepare a solid-state electrolyte having hydroxyl functional groups on the surface thereof.

### Examples 4 to 7

The same as Example 1 except that in <Preparation of positive electrode plate>, the mass ratio of the first main material to the first binder was controlled so that a mass percentage W₁ of the first main material based on the mass of the first coating layer and a mass percentage W₂ of the first binder based on the mass of the first coating layer were as shown in Table 1.

### Examples 8 to 10

The same as Example 1 except that in <Preparation of First Main Material>, grinding time was controlled so that the Dv50 of the first main material was as shown in Table 1.

### Examples 11 to 13

The same as Example 1 except that the thickness D₁ of the first coating layer was controlled as shown in Table 1, the ratio D₂/D₁ of the thickness of the positive electrode material layer to the thickness of the first coating layer changed accordingly, and the thickness D₂ of the positive electrode material layer remained unchanged.

### Examples 14 and 15

The same as Example 1 except that the type of the carbon material was controlled as shown in Table 1.

### Examples 16 to 19

The same as Example 1 except that in <Preparation of first main material>, the mass ratio of the solid-state electrolyte to citric acid was controlled so that a mass percentage W_{C} of the carbon material based on the mass of the first main material was as shown in Table 1, and the powder resistivity of the first main material changed accordingly.

### Examples 20 and 21

The same as Example 1 except that the type of the first binder was adjusted as shown in Table 1.

### Example 22

The same as Example 1 except that in <Preparation of first main material>, untreated lithium aluminum titanium phosphate from <Preparation of solid-state electrolyte> in Example 1 was directly used as the solid-state electrolyte.

### Comparative Example 1

The same as Example 1 except that no first coating layer was provided on the surface of the positive electrode current collector.

### Comparative Example 2

The same as Example 1 except that in <Preparation of First Main Material>, no carbon material was provided on the surface of the solid-state electrolyte, and the solid-state electrolyte was directly used as the first main material.

### Comparative Examples 3 to 6

The same as Example 1 except that relevant preparation parameters were controlled as shown in Table 1.

The preparation parameters and performance tests of the examples and comparative examples are shown in Table 1.

**Table 1**

| | Type of solid-state electrolyte | W₁ (%) | Dv50 of first main material (nm) | D₁ (µm) | Type of carbon material | Wc (%) | ρ (Ω·cm) | Type of first binder | W2 (%) | D2 (µm) | D₂/D₁ | Characteristic peak | -10°C low-temperature discharge capacity retention rate (%) | 80% capacity retention cycles (cycles) | Nail penetration test pass rate (%) |
|---|---|---|---|---|---|---|---|---|---|---|---|---|---|---|---|
| Example 1 | Lithium aluminum titanium phosphate | 85 | 150 | 1 | Amorphous carbon | 4 | 50.02 | Sodium polyacrylate | 15 | 85 | 85.00 | Yes | 85.15 | 880 | 10/10 |
| Example 2 | Lithium lanthanum zirconate | 85 | 150 | 1 | Amorphous carbon | 4 | 50.02 | Sodium polyacrylate | 15 | 85 | 85.00 | Yes | 84.00 | 875 | 10/10 |
| Example 3 | Li_{0.33}La_{0.56}TiO₃ | 85 | 150 | 1 | Amorphous carbon | 4 | 50.09 | Sodium polyacrylate | 15 | 85 | 85.00 | Yes | 84.50 | 878 | 10/10 |
| Example 4 | Lithium aluminum titanium phosphate | 75 | 150 | 1 | Amorphous carbon | 4 | 50.02 | Sodium polyacrylate | 30 | 85 | 85.00 | Yes | 80.20 | 852 | 10/10 |
| Example 5 | Lithium aluminum titanium phosphate | 80 | 150 | 1 | Amorphous carbon | 4 | 50.05 | Sodium polyacrylate | 20 | 85 | 85.00 | Yes | 82.10 | 865 | 10/10 |
| Example 6 | Lithium aluminum titanium phosphate | 90 | 150 | 1 | Amorphous carbon | 4 | 50.015 | Sodium polyacrylate | 10 | 85 | 85.00 | Yes | 89.10 | 881 | 9/10 |
| Example 7 | Lithium aluminum titanium phosphate | 95 | 150 | 1 | Amorphous carbon | 4 | 50.01 | Sodium polyacrylate | 5 | 85 | 85.00 | Yes | 90.10 | 883 | 8/10 |
| Example 8 | Lithium aluminum titanium phosphate | 85 | 50 | 1 | Amorphous carbon | 4 | 50.02 | Sodium polyacrylate | 15 | 85 | 85.00 | Yes | 84.90 | 875 | 10/10 |
| Example 9 | Lithium aluminum titanium phosphate | 85 | 100 | 1 | Amorphous carbon | 4 | 50.02 | Sodium polyacrylate | 15 | 85 | 85.00 | Yes | 85.05 | 879 | 10/10 |
| Example 10 | Lithium aluminum titanium phosphate | 85 | 200 | 1 | Amorphous carbon | 4 | 50.02 | Sodium polyacrylate | 15 | 85 | 85.00 | Yes | 85.30 | 885 | 9/10 |
| Example 11 | Lithium aluminum titanium phosphate | 85 | 150 | 0.5 | Amorphous carbon | 4 | 50.02 | Sodium polyacrylate | 15 | 85 | 170.00 | Yes | 85.40 | 889 | 9/10 |
| Example 12 | Lithium aluminum titanium phosphate | 85 | 150 | 0.75 | Amorphous carbon | 4 | 50.02 | Sodium polyacrylate | 15 | 85 | 113.33 | Yes | 85.20 | 886 | 9/10 |
| Example 13 | Lithium aluminum titanium phosphate | 85 | 150 | 2 | Amorphous carbon | 4 | 50.02 | Sodium polyacrylate | 15 | 85 | 42.50 | Yes | 84.60 | 875 | 10/10 |
| Example 14 | Lithium aluminum titanium phosphate | 85 | 150 | 1 | Single-walled carbon nanotubes | 4 | 50.005 | Sodium polyacrylate | 15 | 85 | 85.00 | Yes | 85.40 | 899 | 10/10 |
| Example 15 | Lithium aluminum titanium phosphate | 85 | 150 | 1 | Conductive graphite | 4 | 50.01 | Sodium polyacrylate | 15 | 85 | 85.00 | Yes | 85.30 | 891 | 10/10 |
| | Type of solid-state electrolyte | W₁ (%) | Dv50 of first main material (nm) | D₁ (µm) | Type of carbon material | Wc (%) | ρ (Ω·cm) | Type of first binder | W2 (%) | D2 (µm) | D₂/D₁ | Characteristic peak | -10°C low-temperature discharge capacity retention rate (%) | 80% capacity retention cycles (cycles) | Nail penetration test pass rate (%) |
| Example 16 | Lithium aluminum titanium phosphate | 85 | 150 | 1 | Amorphous carbon | 1 | 150 | Sodium polyacrylate | 15 | 85 | 85.00 | Yes | 85.00 | 850 | 10/10 |
| Example 17 | Lithium aluminum titanium phosphate | 85 | 150 | 1 | Amorphous carbon | 3 | 100 | Sodium polyacrylate | 15 | 85 | 85.00 | Yes | 85.10 | 878 | 10/10 |
| Example 18 | Lithium aluminum titanium phosphate | 85 | 150 | 1 | Amorphous carbon | 5 | 75 | Sodium polyacrylate | 15 | 85 | 85.00 | Yes | 85.20 | 885 | 10/10 |
| Example 19 | Lithium aluminum titanium phosphate | 85 | 150 | 1 | Amorphous carbon | 8 | 45 | Sodium polyacrylate | 15 | 85 | 85.00 | Yes | 85.60 | 890 | 8/10 |
| Example 20 | Lithium aluminum titanium phosphate | 85 | 150 | 1 | Amorphous carbon | 4 | 50.02 | Calcium polyacrylate | 15 | 85 | 85.00 | Yes | 84.60 | 870 | 10/10 |
| Example 21 | Lithium aluminum titanium phosphate | 85 | 150 | 1 | Amorphous carbon | 4 | 50.02 | Lithium polyacrylate | 15 | 85 | 85.00 | Yes | 84.80 | 873 | 10/10 |
| Example 22 | Lithium aluminum titanium phosphate | 85 | 150 | 1 | Amorphous carbon | 4 | 50.02 | Sodium polyacrylate | 15 | 85 | 85.00 | No | 85.10 | 886 | 7/10 |
| Comparative Example 1 | / | / | / | / | / | / | / | / | / | / | / | / | 68.00 | 881 | 0/10 |
| Comparative Example 2 | Lithium aluminum titanium phosphate | 85 | 150 | 1 | / | / | 400 | Sodium polyacrylate | 15 | 85 | 85.00 | Yes | 80.00 | 800 | 10/10 |
| Comparative Example 3 | Lithium aluminum titanium phosphate | 85 | 30 | 1 | Amorphous carbon | 4 | 50.02 | Sodium polyacrylate | 15 | 85 | 85.00 | Yes | 84.60 | 850 | 10/10 |
| Comparative Example 4 | Lithium aluminum titanium phosphate | 85 | 250 | 1 | Amorphous carbon | 4 | 50.02 | Sodium polyacrylate | 15 | 85 | 85.00 | Yes | 85.40 | 888 | 6/10 |
| Comparative Example 5 | Lithium aluminum titanium phosphate | 85 | 150 | 0.45 | Amorphous carbon | 4 | 50.02 | Sodium polyacrylate | 15 | 85 | 188.89 | Yes | 85.50 | 890 | 5/10 |
| Comparative Example 6 | Lithium aluminum titanium phosphate | 85 | 150 | 3 | Amorphous carbon | 4 | 50.02 | Sodium polyacrylate | 15 | 85 | 28.33 | Yes | 84.30 | 851 | 10/10 |

| | | | | | | | | | | | | | | | |
|---|---|---|---|---|---|---|---|---|---|---|---|---|---|---|---|
| Note: "/" in Table 1 indicates that there is no corresponding preparation parameter or substance; W_{C} represents the mass percentage of the carbon material based on the mass of the first main material; W₁ represents the mass percentage of the first main material based on the mass of the first coating layer; W₂ represents the mass percentage of the first binder based on the mass of the first coating layer; D₁ represents the thickness of the first coating layer; D₂ represents the thickness of the single-side positive electrode material layer; ρ represents the powder resistivity of the first main material; and characteristic peak is a characteristic peak in the infrared spectrum of the first coating layer between 3200 cm⁻¹ and 3400 cm⁻¹. | | | | | | | | | | | | | | | |

As can be seen from Examples 1 to 22 and Comparative Examples 1 to 6, when a solid-state electrolyte with a carbon material provided on the surface thereof is used as the first main material of the first coating layer, the positive electrode plate has the first coating layer structure of the present application, and when the Dv50 of the first main material and the thickness of the first coating layer are within the scope of the present application, the lithium-ion batteries have higher -10°C low-temperature discharge capacity retention rates, 80% capacity retention cycles, and nail penetration test pass rates. Therefore, it indicates that the lithium-ion batteries of the present application have higher nail penetration safety performance while achieving good low-temperature discharge performance and cycling performance.

The type of the solid-state electrolyte and the type of the first binder generally affect the nail penetration safety performance, low-temperature discharge performance, and cycling performance of lithium-ion batteries. As can be seen from Examples 1 to 3 and Examples 20 and 21, when the type of the solid-state electrolyte and the type of the first binder are within the scope of the present application, the lithium-ion batteries have higher -10°C low-temperature discharge capacity retention rates, 80% capacity retention cycles, and nail penetration test pass rates. Therefore, it indicates that the lithium-ion batteries of the present application have higher nail penetration safety performance while achieving good low-temperature discharge performance and cycling performance.

The mass percentage W₁ of the first main material based on the mass of the first coating layer and the mass percentage W₂ of the first binder based on the mass of the first coating layer generally affect the nail penetration safety performance, low-temperature discharge performance, and cycling performance of lithium-ion batteries. As can be seen from Example 1 and Examples 4 to 7, when W₁ and W₂ are within the scope of the present application, the lithium-ion batteries have higher -10°C low-temperature discharge capacity retention rates, 80% capacity retention cycles, and nail penetration test pass rates. Therefore, it indicates that the lithium-ion batteries of the present application have higher nail penetration safety performance while achieving good low-temperature discharge performance and cycling performance.

The ratio D₂/D₁ of the thickness of the positive electrode material layer to the thickness of the first coating layer generally affects the nail penetration safety performance, low-temperature discharge performance, and cycling performance of lithium-ion batteries. As can be seen from Example 1 and Examples 11 to 13, when D₂/D₁ is within the scope of the present application, the lithium-ion batteries have higher -10°C low-temperature discharge capacity retention rates, 80% capacity retention cycles, and nail penetration test pass rates. Therefore, it indicates that the lithium-ion batteries of the present application have higher nail penetration safety performance while achieving good low-temperature discharge performance and cycling performance.

The type of the carbon material, the mass percentage W_{C} of the carbon material based on the mass of the first main material, and the powder resistivity of the first main material generally affect the nail penetration safety performance, low-temperature discharge performance, and cycling performance of lithium-ion batteries. As can be seen from Example 1 and Examples 14 to 19, when the type of the carbon material, W_{C}, and the powder resistivity of the first main material are within the scope of the present application, the lithium-ion batteries have higher -10°C low-temperature discharge capacity retention rates, 80% capacity retention cycles, and nail penetration test pass rates. Therefore, it indicates that the lithium-ion batteries of the present application have higher nail penetration safety performance while achieving good low-temperature discharge performance and cycling performance.

Whether a characteristic peak exists in the infrared spectrum of the first coating layer between 3200 cm⁻¹ and 3400 cm⁻¹ generally affects the nail penetration safety performance, low-temperature discharge performance, and cycling performance of lithium-ion batteries. As can be seen from Example 1 and Example 22, the first coating layer of Example 1 has a characteristic peak between 3200 cm⁻¹ and 3400 cm⁻¹ in the infrared spectrum, while the first coating layer of Example 22 has no characteristic peak between 3200 cm⁻¹ and 3400 cm⁻¹ in the infrared spectrum. Example 1 has higher -10°C low-temperature discharge capacity retention rate, 80% capacity retention cycles, and nail penetration test pass rate, that is, lithium-ion batteries having a characteristic peak between 3200 cm⁻¹ and 3400 cm⁻¹ have better nail penetration safety performance, low-temperature discharge performance, and cycling performance. Therefore, it indicates that the lithium-ion batteries of the present application have higher nail penetration safety performance while achieving good low-temperature discharge performance and cycling performance.

Specifically, as shown in FIG. 2, FIG. 2 is an infrared spectrum test chart of the first coating layer in Example 1, and a characteristic peak exists between 3200 cm⁻¹ and 3400 cm⁻¹ in the infrared spectrum test chart, indicating that the surface of the solid-state electrolyte has hydroxyl functional groups. As shown in FIG. 3, FIG. 3 is an infrared spectrum test chart of the first coating layer in Example 22, and no characteristic peak exists between 3200 cm⁻¹ and 3400 cm⁻¹ in the infrared spectrum test chart, indicating that the surface of the solid-state electrolyte does not have hydroxyl functional groups.

The above descriptions are merely preferred embodiments of the present application and are not intended to limit the present application. Any modifications, equivalent substitutions, improvements, and the like made within the spirit and principles of the present application shall be included within the scope of protection of the present application.

It should be noted that in this document, relational terms such as first and second are used merely to distinguish one entity or operation from another entity or operation, and do not necessarily require or imply any such actual relationship or order between these entities or operations. Moreover, the terms "comprise", "include", or any other variation thereof are intended to encompass a non-exclusive inclusion, such that a process, method, or article that includes a series of elements includes not only those elements but also other elements not expressly listed, or elements inherent to such process, method, or article.

The various embodiments in this specification are described in a related manner, and the same or similar parts between the various embodiments may refer to each other, with each embodiment focusing on differences from the other embodiments.

## Claims

1. An electrochemical device, wherein the electrochemical device comprises a positive electrode plate; the positive electrode plate comprises a positive electrode current collector (11), a first coating layer (12), and a positive electrode material layer (13); the first coating layer (12) is disposed on a surface of the positive electrode current collector (11); the positive electrode material layer (13) is disposed on a surface of the first coating layer (12) facing away from the positive electrode current collector (11); the first coating layer (12) comprises a first main material and a first binder; the first main material comprises a solid-state electrolyte; a carbon material is provided on a surface of the solid-state electrolyte; a Dv50 of the first main material is 50 nm to 200 nm; and a thickness of the first coating layer (12) is 0.5 µm to 2 µm.

2. The electrochemical device according to claim 1, wherein the Dv50 of the first main material is 100 nm to 150 nm.

3. The electrochemical device according to claim 1 or 2, wherein the thickness of the first coating layer (12) is 0.5 µm to 1 µm.

4. The electrochemical device according to any one of claims 1 to 3, wherein a ratio of a thickness of the positive electrode material layer (13) to the thickness of the first coating layer (12) is 35 to 180.

5. The electrochemical device according to any one of claims 1 to 4, wherein the solid-state electrolyte comprises one or more selected from the group consisting of lithium lanthanum zirconate, lithium lanthanum titanate, and lithium aluminum titanium phosphate; and based on a mass of the first coating layer (12), a mass percentage of the first main material is 80% to 90%.

6. The electrochemical device according to any one of claims 1 to 5, wherein the carbon material comprises at least one of amorphous carbon, carbon nanotubes, conductive graphite, or carbon nanofibers; and based on a mass of the first main material, a mass percentage of the carbon material is 3% to 5%.

7. The electrochemical device according to any one of claims 1 to 6, wherein a powder resistivity of the first main material is 50 Ω·cm to 100 Ω·cm.

8. The electrochemical device according to any one of claims 1 to 7, wherein the first binder comprises a water-soluble metal salt compound; and based on a mass of the first coating layer (12), a mass percentage of the first binder is 10% to 20%.

9. The electrochemical device according to claim 8, wherein the water-soluble metal salt compound comprises alkali metal polyacrylates and/or alkaline earth metal polyacrylates; the alkali metal polyacrylates comprise one or more selected from the group consisting of sodium polyacrylate, lithium polyacrylate, and potassium polyacrylate; and the alkaline earth metal polyacrylates comprise one or more of calcium polyacrylate and magnesium polyacrylate.

10. The electrochemical device according to any one of claims 1 to 9, wherein an infrared spectrum of the first coating layer (12) comprises a characteristic peak between 3200 cm⁻¹ and 3400 cm⁻¹.

11. An electronic device, wherein the electronic device comprises the electrochemical device according to any one of claims 1 to 10.
